# EUROPEAN PATENT APPLICATION

(11) **EP 4 119 482 A1**
(43) Date of publication of application: **18.01.2023**
(21) Application number: 21185304.9
(22) Date of filing: 13.07.2021
(51) Int. Cl.: B66C 1/10, B66C 1/66

(54) **LIFTING TOOL ARRANGEMENT FOR LIFTING A COMPONENT, TOOL MEANS FOR SUCH A LIFTING TOOL ARRANGEMENT AND METHOD FOR LIFTING A WIND TURBINE COMPONENT**

(71) Applicant: Siemens Gamesa Renewable Energy A/S, 7330 Brande (DK)
(72) Inventor: Dos Santos Duarte Carvalho, Pedro, 8700 Horsens (DK); Hansen, Klaus Hjorth, 7300 Jelling (DK); Thomsen, Anders Elkjaer, 7400 Herning (DK)
(74) Representative: SGRE-Association

(57) **Abstract**

Lifting tool arrangement for lifting heavy components, especially a wind turbine or wind turbine component, comprising
- a first tool means (2) with a first elongated tool part (4) having an interface (6) adapted to be connected to a lifting device, and a second tool part (9) connected to the first elongated tool part (2) and extending transverse to the first elongated tool part (2),
- and a second tool means (3) provided at the component, comprising an opening (12) which is shaped such that, in the lifting position, the first elongated tool part (4) extends through the opening (12) while the second tool part (9) is counter-beared towards an inner surface (13) of the second tool means (3).

## Description

The invention refers to a lifting tool arrangement for lifting a, preferably heavy, component, especially a wind turbine or a wind turbine component.

For lifting especially larger or heavy components like an entire wind turbine or a wind turbine component like a turbine blade, a nacelle or a hub, a lifting means in form of a crane is usually used, to which lifting means the component is coupled. The lifting means comprises for example ropes, to which a hook is attached, which hook is inserted for example into a lug arranged at the component.

For lifting wind turbine components, a lifting arrangement is disclosed in EP 3 034 860 B1. The lifting arrangement comprises a tool arrangement with a stem arranged at the lifting device. The stem comprises a circular groove or recess. It is inserted into an opening of the component to be lifted. The inner end of the stem, which is arranged inside of the component, is then finally locked by means of a controllable locking device, which comprises two half ring locking elements, which engage into the groove or radial recess of the stem, thereby locking it.

Another lifting or tool arrangement for lifting a wind turbine blade is disclosed in US 9 719 487 B2. A frame-like lifting tool is coupled to the lifting device respectively the hook. The frame is provided with several stems, which are inserted in separate bores of the turbine blade. The stems extend through the entire turbine blade and are fixed to the turbine blade by means of bolts or pins, which are inserted into cross bores of the respective stems.

Finally WO 2005/071261 discloses a lifting or tool arrangement, adapted to lift a turbine blade. This arrangement comprises two lifting tool elements, which are arranged on the upper and lower outer surface of the blade. They are provided with respective bores, into which respective connection bolts, which extend into respective bores of the turbine blade and which extend from one tool element to the other, are inserted and fixed to the tool elements, which are firmly attached to the respective blade surface.

The known tool arrangements are complex structures, which involve the provision of several tool elements at the lifting device side and at the component side. Further the arrangement of the respective tool elements or their coupling is complex and cumbersome.

It is an object of the invention to provide an improved lifting tool arrangement.

For solving the problem, a lifting tool arrangement for lifting heavy components like a wind turbine or wind turbine component is disclosed, comprising
- a first tool means with a first elongated tool part having an interface adapted to be connected to a lifting device, and a second tool part connected to the first elongated tool part and extending transverse to the first elongated tool part,
- and a second tool means provided at the component, comprising an opening which is shaped such that, in the lifting position, the first elongated tool part extends through the opening while the second tool part is counter-beared towards the inner surface of the second tool means.

The inventive lifting tool arrangement is simple in its setup and simple in its handling. It comprises a first tool means, which has an interface, by which it can be connected to a lifting device, like a respective attachment interface arranged at the ropes of the crane. This interface may for example be or comprise a bore, into which a bolt or pin is inserted, to which for example shackle is coupled, which is connected to a hook of the crane, or to which pin respective cable lugs are attached etc.

To this first elongated tool part, which is for example a longitudinal bar having a rectangular or circular cross section, a second tool part is connected. The cross bar can preferably be an integral part to the center bar, so that the first tool means is a one-piece entity. This second tool part extends transverse to the elongated tool part, so that it, depending on the shape of the second tool part, extend to the side of the elongated first tool part.

The arrangement further comprises a second tool means, which is provided at the component. This second tool means, which may for example be a mechanically stiff plate made for example of metal or the like, which is attached or arranged for example at the turbine blade, or which is an integral part of for example the nacelle or the like, comprises an opening respectively a through hole. This through hole is adapted to receive the first tool means respectively is designed such that the first elongated tool part can extend through this opening. The second transverse tool part is arranged such that it is, in the lifting position, counter-beared at the inner surface of the second tool means, so that it extends over the opening and abuts the neighbouring inner surface areas and is counter-beared at the inner surface.

In the lifting position, a mechanically stable, while simple connection is realized, which allows for lifting the component, when the first tool means is lifted by the lifting device like the crane. The first tool means is simple in its setup, as it only comprises the first elongated tool part and the second transverse extending tool part. Also the second tool means is simple in its construction, as it only comprises a respective opening and a sufficiently stable neighbouring area comprising the inner surface, which is designed to counter-bear the second transverse tool part.

For coupling the component to the lifting device it is only necessary to arrange the first tool means such that it extends with its first elongated tool part through the opening and that it is arranged with the second transverse tool part adjacent to the inner surface. By simply pulling the first tool means the second transverse tool part is brought into its counter-beared lifting position, so that by further pulling the first tool means the component can be lifted.

As mentioned, the second tool means may be a separate item, which is arranged and fixated at the component. If the component is for example a turbine blade, the second tool means, like a respective metal plate comprising the opening, is firmly fixed to the blade shell, for example by laminating it into the shell structure or by arranging it at the inner shell surface or the like. If the component is for example a nacelle or the hub, either such a separate second tool means item can be arranged and fixated at this type of component, for example by welding the metal second tool means at the appropriate position to the component. If the component respectively the part which shall be connected to the first tool means is stable enough, as it is for example made of metal or the like, it is possible to use this integral component part as the second tool means and to provide it with the simple opening, through which the first tool means engages. So there are various simple alternatives to provide the second tool means at the component, whatever the component is.

In a first embodiment, the first tool element may be T-shaped with a first elongated tool part in form of a center bar as a first leg and the second tool part in form of a cross bar as second leg, wherein the opening is slit-like and adapted to allow a passage of the cross bar when inserted from an outer surface of the second tool means or of the center bar when inserted from the side of the inner surface of the second tool means, wherein the cross bar is twisted relative to the opening such that it extends cross to the longitudinal axis of the opening. In this first simple embodiment the first tool means is T-shaped. The first elongated tool part is a center bar, which center bar comprises the interface adapted to be connected to the lifting device. To this center bar a second tool part is attached or, preferably, integrally connected forming a one-piece element, which is a cross bar, which extends to both sides of the center bar. Both bars or legs are therefore arranged in a T-form. The first tool element therefore is, seen from the side, a slim device. Seen under 90°, the device is quite wide, as the cross bar extends to both sides.

The opening of the second tool means of this embodiment is slit-like. The width of this slit-like opening is slightly larger than the width of the T-shaped first tool part, seen from the slim side. This allows to insert the first tool means, which is for example already attached to the lifting device, from the outer surface through the opening with the cross bar being first inserted into the opening until it is below the inner side, towards which it shall be counter-beared. In an alternative, it is also possible to arrange the first tool means from the inner side by pushing the center bar through the opening and then attaching it to the lifting device. However the first tool means is arranged, it is then only necessary to arrange it such that the cross bar extends cross to the longitudinal axis of the opening, so that, when a first tool means is lifted, the cross bar is counter-beared against the inner surface.

So this embodiment is characterized by a simple T-shaped first tool means and a second tool means comprising a simple slit opening.

Regarding the arrangement of the cross bar, several alternatives are feasible. In a first alternative the cross bar may be firmly attached to the center bar for example by welding or both bars are, preferably, an integral one-piece. No relative movement of the cross bar to the center bar is possible.

In a second alternative, the cross bar may be twistably arranged at the center bar. This pivotable arrangement allows to twist or pivot the cross bar relative to the non-moving center bar. When the first tool means is inserted from the outer surface, it is then only necessary to simply twist the cross bar from its inserting position, in which it is parallel to the longitudinal axis of the opening, into the lifting position, in which is transversed to the longitudinal axis of the opening. This twisting may be performed automatically, when a respective automatic twisting means is provided at the lifting device, which lifting means may for example comprise hydraulic or pneumatic means for automatically twisting the cross bar. Alternatively the twisting may also be done manually from the inside.

In a further alternative, the cross bar may also comprise two cross bar sections, each of which is pivotally arranged at the center bar such that each cross bar section can be pivoted from a first position, in which it is parallel to the center bar, into a second position, in which it is cross to the center bar. According to this alternative, the shape and size of the first tool means may be changed. In the inserting position, the cross bar sections are in the non-working position, they are pivoted towards the center bar and are for example parallel to it. When the tool means is inserted deep enough into the opening, both cross bar sections are pivoted into the working position, in which they extend for example rectangular to the center bar, in which position they are secured or abut each other or the like. In this position, the counter-bearing against the inner surface is possible. If the slit-like opening is wide enough that the first tool means in the non-working position may be passed through with the non-working cross bar sections being arranged transverse to the longitudinal axis of the opening, they can then be simply pivoted in the working position and are already correctly orientated rectangular to the longitudinal axis of the opening. Otherwise a twisting movement is necessary.

Finally according to a further alternative the cross bar may also be extendable from a first short form into a second elongated form. Here the cross bar is telescopic and may be changed in its length. This change may be done manually or also automatically, for example controlled via the lifting device by a respective hydraulic or pneumatic actuation means. Also in this embodiment, a non-working position is given, which allows to easily insert the first tool means into and through the bore. When it is finally inserted, it is only necessary to extend or elongate the cross bar to bring it in the working position, which allows the counter-bearing against the inner surface.

As already mentioned, the center bar may have a rectangular or circular cross section. Also the cross bar may have a rectangular or circular cross section. They are made of metal, preferably steel.

Especially the circular cross section of the cross bar is advantageous, when the inner surface of the second tool means is provided with a guiding structure. This guiding structure is adapted to guide the cross bar in a lifting position. Such a guiding structure may for example comprise one or more slanted guiding surfaces or arcuated guiding surfaces or the like. The circular cross bar may simply slide on the guiding structure from the position, where it first abuts the guiding structure, into a final lifting position defined by the guiding structure. So the cross bar may for example slide on the arcuated guiding surface to the top point of the guiding surface, which defines the final lifting position. This guiding may be performed automatically, as the sliding of the cross bar is easily possible, wherein preferably some lubricant may be provided to further ease this guiding.

Further it is, alternatively or additionally, possible to provide the inner surface with a locking structure or locking element adapted to lock the cross bar in the lifting position, into which it may for example be guided via the guiding structure. This locking ascertains that no unwanted movement of the cross bar out of the final lifting position is possible. The locking structure may for example be a recess or a pocket adapted to receive the cross bar and for example shaped for a kind of form-fit reception of the cross bar, a locking element may for example be a locking wedge or the like.

An alternative embodiment of the setup of the first tool means is characterized in that the first elongated tool part is a center bar as a first leg and the second tool part is a disc as the second leg, wherein the center bar is connected to the disc in the center of the disc, and wherein the opening comprises a first opening part having a size adapted to allow a passage of the disc when inserted from an outer surface and of the second tool means, and a second opening part being slit-like having a width smaller than the width of the disc such that it extends across the second opening part. Comparable to the first alternative, also this embodiment of the first tool means comprises a center bar. But different to the T-shaped embodiment, in this embodiment the second tool part is a disc, for example a circular disc or a rectangular disc, which is aattached to the center bar. The center bar and the disc are preferably an integral one-piece device. The center bar is arranged at the disc center, so that a symmetric arrangement is given. The opening in the second tool means is differently shaped compared to the opening of the first embodiment. In this second embodiment the opening has a keyhole shape, comprising a first opening part, which is quite large and has a size which is adapted to allow a passage of the disc. If the disc is for example circular, the first opening part is also circular. So the disc may easily be moved through this first opening part. The opening further comprises a second opening part, which again is longitudinal and slit-like and which directly connects to the first opening part. The width of this slit opening corresponds roughly to the thickness or width of the center bar, as the center bar is moved into and through this slit by a longitudinal movement after inserting the disc in order to bring the first tool means in the final lifting position. When moving the first tool means and the center bar into the slit opening, the disc is moved under the inner surface, against which it abuts and is counter-beared, when finally the first tool means is lifted by the crane.

Also this embodiment is very simple in its setup, as well regarding the, preferably one-piece first tool means, which again comprises only two portions, i.e. the center bar and the disc, as regarding the opening, which here has a keyhole shape.

Also this embodiment may comprise an inner surface which is provided with a guiding and/or locking structure for guiding the disc in a lifting position and/or for locking the disc in the lifting position. The guiding structure may again comprise slanted or arcuated guiding surfaces or slopes, while the locking structure or locking element may comprise a recess or a pocket, adapted to receive the disc, preferably in a form fit manner. This recess or pocket may for example also be circular, when a circular disc is used. Also a locking wedge may be used as a separate locking element.

A third embodiment is characterized in that the first elongated part is a center bar as a first leg and the second tool part is a disc as a second leg, wherein the center bar is connected to the disc in the center of the disc, and wherein the opening has a size adapted to allow a passage of the center bar when inserted from the inner surface of the second tool means, and wherein the size of the opening is smaller than the size of the disc such that the disc extends across the opening.

This embodiment is, regarding the setup of the first tool means, the same as the second embodiment. Again the first tool means comprises the center bar and the disc attached to the center bar, forming an integral one-piece entity. Different to the second embodiment, in this third embodiment the opening in the second tool means is only a small opening corresponding to the size respectively thickness or cross section of the center bar, which is, when the first tool means is put in place, moved through this opening from the inside of the component. This may be done manually, with a person lifting the first tool means and passing the center bar through the opening, so that it can be connected with its interface to the lifting device at the outside of the component. As the opening is very small and much smaller than the disc, the disc will then automatically be counter-beared at the inner surface, when the first tool means is lifted.

Also this embodiment is very simple in its setup, as again the first tool means only comprises the center bar and the disc, and as the opening is just a simple opening and especially a bore, through which the center bar may be passed.

Also in this embodiment an inner surface may be provided with a guiding and/or locking structure for guiding the disc in a lifted position and/or for locking the disc in the lifting position, so that any movement is prevented. Again the guiding and/or locking structure may comprise a slandered or arcuated guiding surface or slope or a recess or pocket receiving and locking the disc or a separate locking element.

As mentioned, the first elongated tool part comprises the interface for connecting it to the connection device of the lifting device. This interface may for example be a simple bore extending cross to the longitudinal axis of the first elongated tool part, which bore is adapted to receive a bolt or a pin for fixating a connection means for connecting the first tool part to the lifting device. To this bolt or pin for example a shackle may be fixed, which shackle is then fixed to a hook of the lifting device. Also a cable sling or a chain may be fixated to the pin. So there are various possibilities of the setup of the connection device.

The interface may comprise two parallel, flat surfaces provided at the end of the center bar, where the bore is arranged. These flat surfaces allow for a proper engagement of for example a shackle or the like.

According to a further embodiment the second tool part may comprise a coating or a cover made of a material which is softer than the material of the second tool part. As mentioned, the first tool means is preferably made of metal respectively steel. In order to avoid any damage of the component to be lifted in the area of the inner surface, at which the second tool part respectively the cross bar or the disc is counter-beared, a respective damping coating or cover may be attached to or provided at the second tool part. This coating or cover, which is for example made of rubber or foam or a comparable softer material, is sandwiched between the inner surface and the metal part of the second tool part, so that the metal second tool part does not directly contact the inner surface. This may be advantageous when for example the inner surface is provided at a blade and is realized at a blade part made for example of fiber reinforced resin or the like.

The invention further refers to a first tool means for a lifting tool arrangement as mentioned above, comprising a first elongated tool part having an interface adapted to be connected to a lifting device, and a second tool part connected to the first elongated tool part and extending transverse to the elongated tool part.

In a first embodiment, this first tool means may be T-shaped with a first elongated tool part in form of a center bar as a first leg and the second tool part in form of a cross bar as the second leg.

The cross bar may be firmly attached to the center bar. But it may also be twistably arranged at the center bar, so that it may be twisted relative to the center bar. In an alternative the first tool means may be twistably arrangeable at the lifting device. In another alternative a cross bar may comprise two cross bar sections, each of which is pivotally arranged at the center bar such that each cross bar section can be pivoted from a first position, in which it is parallel to the center bar into a second position, in which it is cross to the center bar. In yet another alternative the cross bar may be extendable from a first short form into a second elongated form.

Preferably the cross bar has a cylindrical cross section, which, as mentioned above, is advantageous especially for an automatic movement or guiding into the lifting position when in contact with the inner surface of the second tool means.

In an alternative the fist elongated tool part again is a center bar as a first leg and the second tool part is a disc as the second leg, wherein the center bar is connected to the disc in the center of the disc.

The interface of the first elongated tool part may be a bore extending cross to the longitudinal axis of the first elongated tool part and adapted to receive a bolt or a pin for fixating a connection means for connecting the first tool part to the lifting device.

The second tool part may comprise a coating or a cover made of a material which is softer than the material of the second tool part.

Finally the invention refers to a method for lifting a wind turbine component, especially a turbine blade or a nacelle or a hub, using a lifting tool arrangement as mentioned above, comprising the steps of:
- Passing the first tool means coupled to or to be coupled to the lifting device through the opening of the second tool means arranged at the component with the first elongated tool part extending through the opening and with the second tool part being arranged adjacent to the inner surface of the second tool means,
- Counter-bearing the second tool part against the inner surface of the second tool means, and
- Pulling the first tool means with the lifting means for lifting the component.

As already mentioned in the discussion of the inventive lifting tool arrangement, the first tool means may be inserted into the opening from the outside, when the opening allows a passage of the second tool part of the first tool means. In an alternative it is also possible to move the first tool means through the opening from the inside, with the center bar extending through the opening. No matter how the first tool means is arranged respectively moved to the opening, in the final position the first tool part respectively the center bar extends through the opening with the interface being at the outside and the second tool part, be it the cross bar or the disc, being arranged adjacent to the inner surface, against which it is then counter-beared when the first tool means is lifted.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1 - 8: various principle illustrations showing a first embodiment of a lifting tool arrangement with a T-shaped first lifting means and a second lifting means with a slit-like opening,
- Fig. 9: a principle illustration of another alternative of a first lifting means which may be used in a lifting tool arrangement of the figures 1 - 8,
- Fig. 10: a principle illustration of a second lifting means which may be used in a lifting tool arrangement of the figures 1 - 8,
- Fig. 11 - 14: various illustrations of a lifting tool arrangement of a second embodiment with a first tool means comprising a disc and a second tool means comprising a keyhole shaped opening, and
- Fig. 15 + 16: two principle illustrations of a third embodiment of a lifting tool arrangement with a first tool means comprising a disc and a second tool means only comprising a small bore or slit like opening.

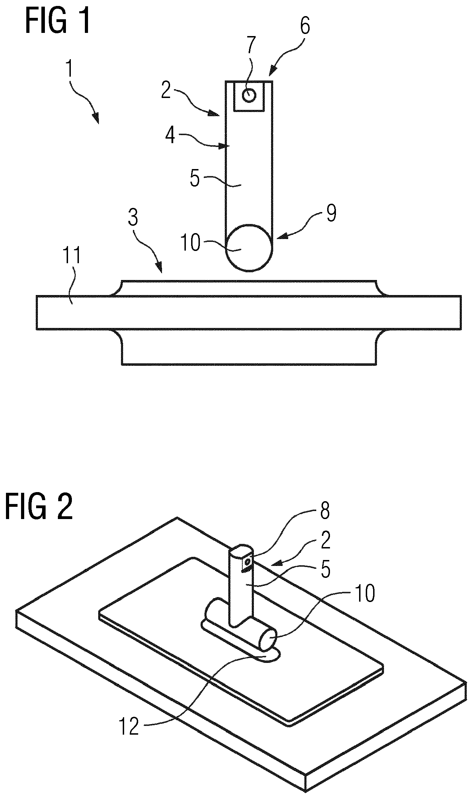

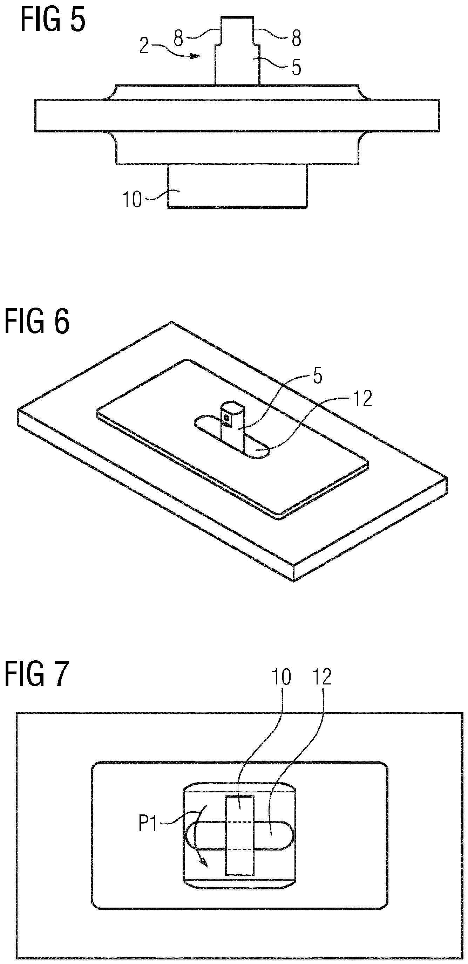

Figures 1 - 8 show a first embodiment of an inventive lifting tool arrangement 1, comprising a first lifting tool means 2 and a second lifting tool means 3. The first lifting tool means in this embodiment is T-shaped with a first elongated tool part 4, which is a center bar 5 having for example a circular cross section. At the free end of the center bar 5 and interface 6 is provided adapted to realize a connection with a connection means of a lifting device like a crane. The interface 6 comprises a bore 7 extending cross to the longitudinal axis of the center bar 5. The bore 7 is arranged in an area of two parallel flattened surfaces 8, as shown for example in figures 1 and 5.

The first tool means further comprises a second tool part 9 in form of a cross bar 10, which is attached to the opposite end of the center bar 5, so that it extends to both sides of the center bar 5 and finally builds the T-form. So the center bar 5 is a first leg and the cross bar 10 is a second leg. The second tool means 3 in this embodiment is for example a plate 11, which, as the first tool means 2, is preferably made of metal and is arranged at the component to be lifted. If the component is for example a turbine blade, this metal plate 11 may be laminated into the blade shell structure or may be attached at the inner side of the blade shell. If the component is a metal component like a nacelle or the like, the metal plate 11 may be fixated to the component for example by welding or screwing. Finally the metal plate 11 may also be an integral part of the component, for example a metal wall element or the like.

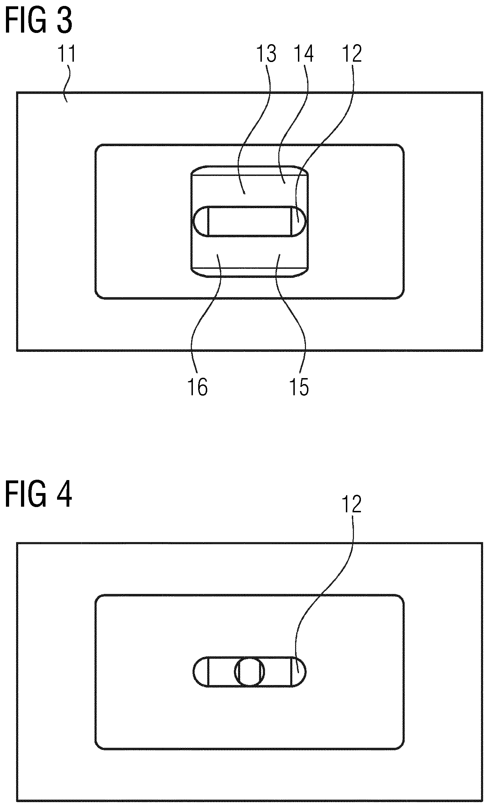

The second tool means is provided with an opening 12, which in this embodiment, see for example figures 3 and 5, is slit-like. It has a width which is slightly larger than the width of the first tool means 2, as shown in the orientation of fig. 1, so that the first tool means 2 respectively the circular cross bar 10 and the circular center bar 5 may be pushed through the opening 12.

The second tool means 3 respectively the plate 11 further comprises an inner surface 13, which in this embodiment is provided with the recess 14 having a guiding structure 15 here in form of a curved or arcuated surface 16, as shown in figures 3 and 7. The inner surface 13 is the surface at which the cross bar 10 is finally counter-beared in the lifting position, wherein the guiding structure 15 respectively the arcuated surface 16 finally guides the cross bar 10 and therefore the first tool means 2 in the final lifting position.

For coupling the lifting device to the component, the lifting device, to which the first tool means 2 is already attached, lowers the first tool means 2, so that the cross bar 10 and the center bar 5 are moved through the opening 12, as shown in the figures. The first tool means 2 is lowered, until the cross bar 10 is below the inner surface 13. Now the first tool means 2 is twisted for 90°, as shown in fig. 5 compared to fig. 3, so that the cross bare 10 extends transverse to the longitudinal axis of the opening, as shown in fig. 7. When now the lifting device lifts the first tool means 2, the cross bar 10 abuts the inner surface 13. The guiding structure 15 respectively the arcuated surface 16 now finally allows the cross bar 10 to slightly move along the arcuated surface 16 until it reaches the uppermost surface point which defines the final lifting position. When now the lifting device further moves the first tool means 2, the coupled component is lifted.

The twisting of the first tool means 2 may be done automatically, for example by means of an automatic twisting means arranged in the coupling of the first tool means 2 to the connection device of the lifting device. This twisting means may for example be a hydraulic or pneumatic twisting means. In an alternative the twisting may also be done manually either from the outside or from the inside of the component.

As indicated by the dashed arrow P1 in fig. 7, it is also possible to arrange the cross bar 10 pivotable at the center bar 5, so that the cross bar 10 can be freely rotated relative to the center bar 10. This allows to solely twist the cross bar 10 from the inside of the component in order to bring it into the transverse position without moving the center bar 5.

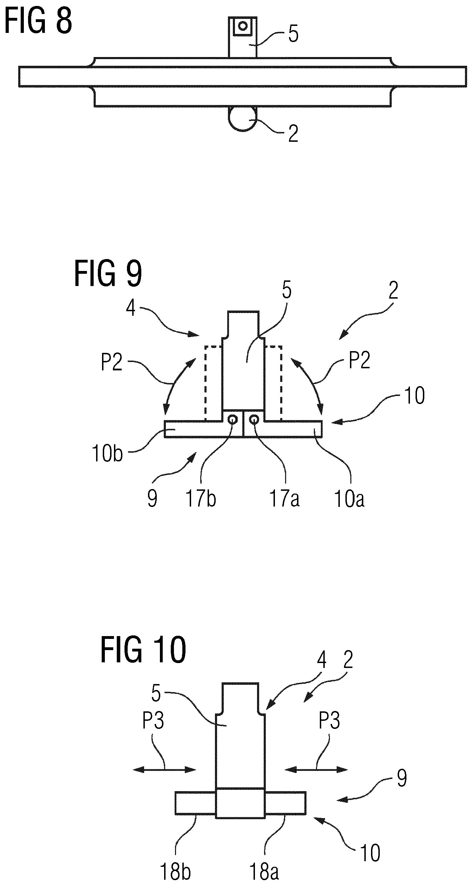

Fig. 9 shown an alternative setup of the first tool means 2. In this embodiment again a first elongated tool part 4 in the form of a central bar 5 is provided, at which a second tool part 9 in form of a cross bar 10 is arranged. In this embodiment the cross bar 10 comprises two cross bar sections 10a, 10b, which are pivotably attached at the center bar 5 and pivot around respective pivot axis 17a, 17b. This allows to pivot the cross bar sections from the shown lifting position, in which they extend to both sides of the center bar 5, into a non-working position, which is shown by the dashed lines, in which they are arranged parallel to the center bar 5. This pivot movement is shown by the arrows P2.

For the insertion of the first tool means 2 into the opening 12 the cross bar sections 10a, 10b are in the non-working position. After passing through the opening 12, they are pivoted into the working position as shown in fig. 9, thereby automatically overlapping with the inner surface 13, against which they are then finally counter-beared. In this embodiment, the opening 12 not necessarily needs to be slit-like but may also be a simple bore having a dimension which allows to insert the first tool means in the non-working position.

Fig. 10 shows another embodiment of a first tool means 2 again comprising a first elongated tool part 4 in the form of a center bar 5 and a second tool part 9 in the form of a cross bar 10. This cross bar 10 is extendable, it is a telescopic bar, having two bar elements 18a, 18b, which can be linearly moved, as shown by the arrows P3. They can be moved from an inner non-working position into the shown lifting position, in which they extend to the sides of the center bar 5. Again the first tool means 2 may be moved through the opening 12 with the cross bar elements 18a, 18b being in the non-working position, after which, when the cross bar 10 is below the inner surface 13, they are preferably automatically extended in their working position allowing to engage the inner surface 13.

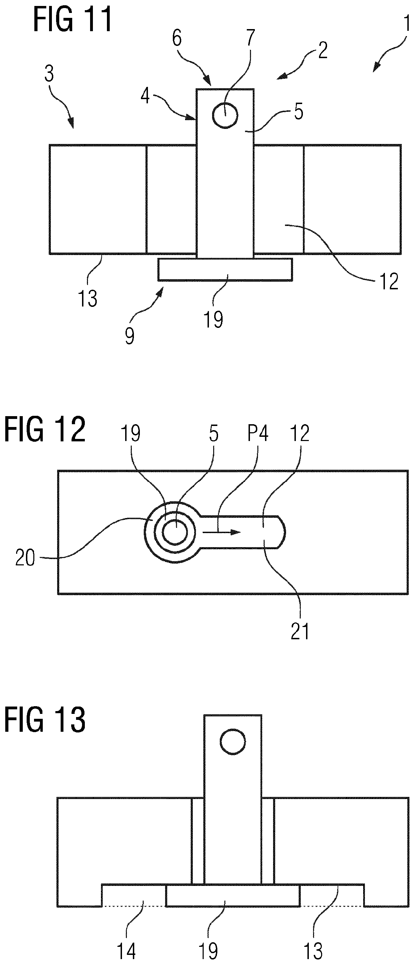

Figures 11 - 14 show another embodiment of a lifting tool arrangement 1, again comprising a first tool means 2 with a first elongated tool part 4 in the form of a center bar 5 with an interface 6 comprising a bore 7 preferably arranged at the flat surface areas.

To the center bar 5 a second tool part 9 in form of a disc 19 is integrally formed, as again the elements are made of metal. Optionally welding the disc to the center bar is possible. The center bar 5 is arranged in the center of the disc 19, as shown in fig. 12.

The second tool means 3, which is again only shown in principle, and which may be a separate element attached to the component to be lifted, or which may be an integral element of the component to be lifted, comprises an opening 12, which in this embodiment, see fig. 12, has a keyhole shape. It comprises a first opening part 20, which in this embodiment corresponds to the circular shape of the disc 19 and is also circular, but has a larger diameter than the diameter of the disc 19. To the first opening part 20 a second opening part 21 is connected, which is slit-like and which has a width which is smaller than the diameter of the disc 19.

For connecting the lifting device to the component, the first tool means 2 is lowered and the disc 19 and the center bar 5 are moved through the first opening part, until the disc 19 is below the inner surface 13 of the second tool means 3. Now, see fig. 12 which shows a top view of the arrangement of fig. 11, the first tool means 2 is horizontally moved, as shown by the arrow P4, so that the center bar 5 is moved into the second slit-like opening part 21. When moving it into the opening part 21, the disc 19 is automatically moved underneath the inner surface 13, which is provided with a recess 14, which accommodates the disc 19 and which is also a locking means, as it prevents the disc 19 from moving out of the recess when engaged.

When the first tool means 2 is moved to the side the first tool means 2 is lifted, so that the disc 19 is moved into the recess and counter-beared at the inner surface 13, so that the tool means are engaged. When now the first tool means is further lifted, also the component is lifted.

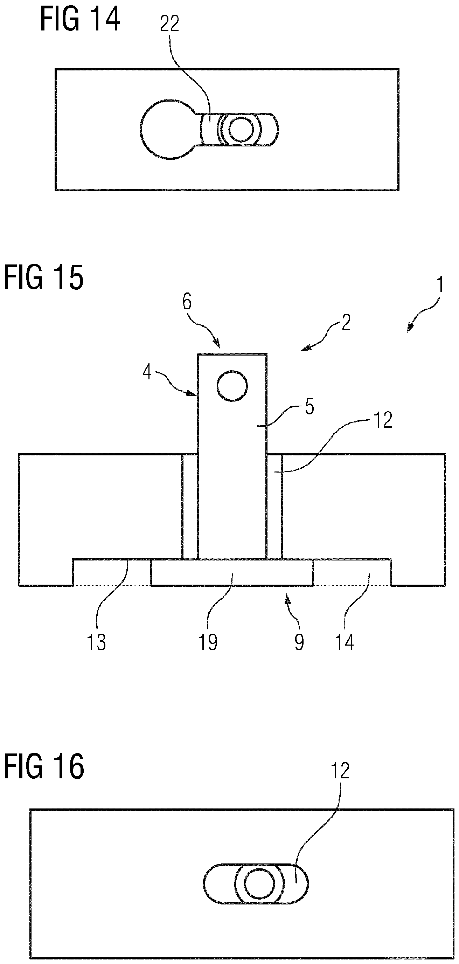

Fig. 14 shows the possibility to additionally insert a locking element 22 like a wedge or the like in the opening part 21, which prevents the first tool means 2 from a further horizontal movement.

The embodiment of figures 15 and 16 show a lifting tool arrangement 1, again comprising a first tool means 2 with a first tool part 4 in form of a center bar 5 and a second tool part 9 in form of a disc 19. In this embodiment the opening 12 as shown in fig. 16, which is a top view of the arrangement of fig. 15, is only slit-like and has a width which is smaller than the diameter of the circular disc 19. In this embodiment the first tool means 2 is positioned from the inside of the component. The first tool means, which is not yet coupled to the lifting device, is moved with the center bar through the opening 13 from the inner side respectively the side of the inner surface 13, until the connection interface 6 can be connected to the connection means of the lifting device at the outside of the component. The first tool means 4 is then lifted, so that the disc 19 is moved against the inner surface 13, where it is counter-beared, so that finally the component can be lifted.

Again a recess 14 may be provided, in which the inner surface 13 counter-bearing the disc 19 is provided.

Finally, the second tool part 9, be it the cross bar 10 or the disc 19, may be provided with a coating or a cover, which acts as a damping means, as it is made of a material which is softer than the metal material of the second tool part. This coating or cover is sandwiched between the cross bar 10 or the disc 19 and the inner surface 13 in order to prevent any damage resulting from a direct contact.

Although the present invention has been described in detail with reference to the preferred embodiment, the present invention is not limited by the disclosed examples from which the skilled person is able to derive other variations without departing from the scope of the invention.

## Claims

1. Lifting tool arrangement for lifting a component, especially a wind turbine or wind turbine component, comprising
- a first tool means (2) with a first elongated tool part (4) having an interface (6) adapted to be connected to a lifting device, and a second tool part (9) connected to the first elongated tool part (2) and extending transverse to the first elongated tool part (2),
- and a second tool means (3) provided at the component, comprising an opening (12) which is shaped such that, in the lifting position, the first elongated tool part (4) extends through the opening (12) while the second tool part (9) is counter-beared towards an inner surface (13) of the second tool means (3).

2. Lifting tool arrangement according to claim 1, **characterized in** the first tool (2) means is T-shaped with the first elongated tool part (4) in form of a center bar (5) as a first leg and the second tool part (9 in form of a cross bar (10), preferably with a circular cross section, as a second leg, wherein the opening (12) is slit-like and adapted to allow a passage of the cross bar (10) when inserted from an outer surface of the second tool means (3) or of the center bar (5) when inserted from the side of the inner surface (13) of the second tool means (3), wherein the cross bar (5) is twisted relative to the opening (12) such that it extends cross to the longitudinal axis of the opening (12).

3. Lifting tool arrangement according to claim 2, **characterized in that** the cross bar (12) is twistably arranged at the center bar (5), or that the first tool means (2) is twistably arrangeable at the lifting device, or that the cross bar (10) comprises two cross bar sections (10a, 10b), each of which is pivotally arranged at the center bar (5) such that each cross bar section (10a, 10b) can be pivoted from a first position, in which it is parallel to the center bar (5), into a second position, in which it is cross to the center bar (5), or that the cross bar (10) is extendable from a first short form into a second elongated form.

4. Lifting tool arrangement according to claim 1, **characterized in that** the first elongated tool part (4) is a center bar (5) as a first leg and the second tool part (9) is a disc (19) as the second leg, wherein the center bar (5) is connected to the disc (19) in the center of the disc (19), and wherein the opening (12) comprises a first opening part (20) having a size adapted to allow a passage of the disc (19) when inserted from an outer surface of the second tool means (3), and a second opening part (21) being slit-like having a width smaller than the width of the disc (19) such that it extends across the second opening part (20).

5. Lifting tool arrangement according to claim 1, **characterized in that** the first elongated tool part (4) is a center bar (5) as a first leg and the second tool part (9) is a disc (19) as a second leg, wherein the center bar (5) is connected to the disc (19) in the center of the disc (19), and wherein the opening (12) has a size adapted to allow a passage of the center bar (5) when inserted from the side of the inner surface (13) of the second tool means (3), and wherein the size of the opening (12) is smaller than the size of the disc (19) such that the disc (19) extends across the opening (12).

6. Lifting tool arrangement according to one of the claims 2 to 5, **characterized in that** the inner surface (13) is provided with a guiding and/or locking structure (15) for guiding the cross bar (5) or the disc (19) in a lifting position and/or for locking the cross bar (5) or the disc (19) in the lifting position, wherein the guiding and/or locking structure (15) preferably comprises a slanted or arcuated guiding surface (16) or a recess (14) or pocket receiving and locking the cross bar (5) or the disc (19).

7. Lifting tool arrangement according to one of the preceding claims, **characterized in that** the interface (6) of the first elongated tool part (4) is a bore (7) extending cross to the longitudinal axis of the first elongated tool part (4) and adapted to receive a bolt or pin for fixating a connection means for connecting the first tool part (4) to the lifting device.

8. Lifting tool arrangement according to one of the preceding claims, **characterized in that** the second tool part (9) comprises a coating or a cover made of a material which is softer than the material of the second tool part (9).

9. First tool means for a lifting tool arrangement according to one of the preceding claims, comprising a first elongated tool part (4) having an interface (6) adapted to be connected to a lifting device, and a second tool part (9) connected to the first elongated tool part (4) and extending transverse to the elongated tool part (4).

10. First tool means according to claim 9, **characterized in that** it is T-shaped with the first elongated tool part (4) in form of a center bar (5) as a first leg and the second tool part (9) in form of a cross bar (10), preferably with a circular cross section, as the second leg.

11. First tool means according to claim 10, **characterized in that** the cross bar (10) is twistably arranged at the center bar (5), or that the first tool means (2) is twistably arrangeable at the lifting device, or that the cross bar (10) comprises two cross bar sections (10a, 10b), each of which is pivotally arranged at the center bar (5) such that each cross bar section (10a, 10b) can be pivoted from a first position, in which it is parallel to the center bar (5) into a second position, in which it is cross to the center bar (5), or that the cross bar (10) is extendable from a first short form into a second elongated form.

12. First tool means according to claim 9, **characterized in that** the first elongated tool part (4) is a center bar (5) as a first leg and the second tool part (9) is a disc (19) as the second leg, wherein the center bar (5) is connected to the disc (19) in the center of the disc (19).

13. First tool means according to one of the claims 9 to 12, **characterized in that** the interface (6) of the first elongated tool part (4) is a bore (7) extending cross to the longitudinal axis of the first elongated tool part (4) and adapted to receive a bolt or pin for fixating a connection means for connecting the first tool part (4) to the lifting device.

14. First tool means according to one of the claims 9 to 13, **characterized in that** the second tool part (3) comprises a coating or a cover made of a material which is softer than the material of the second tool part (3).

15. Method for lifting a wind turbine component, especially a turbine blade or a nacelle or a hub, using a lifting tool arrangement (1) according to one of the claims 1 to 10, comprising the steps of:
- Passing the first tool means (2) coupled to or to be coupled to the lifting device through the opening (12) of the second tool means (3) arranged at the component with the first elongated tool part (4) extending through the opening (12) and with the second tool part (9) being arranged adjacent to the inner surface (13) of the second tool means (3),
- Counter-bearing the second tool part (9) against the inner surface (13) of the second tool means (3), and
- Pulling the first tool means (2) with the lifting means for lifting the component.
